# EUROPEAN PATENT SPECIFICATION

(11) **EP 1 192 523 B1**
(45) Date of publication and mention of the grant of the patent: **08.01.2003**
(21) Application number: 00942263.5
(22) Date of filing: 03.07.2000
(51) Int. Cl.: G06F 1/16

(54) **COMPUTER WITH ILLUMINATOR FOR KEYBOARD**
RECHNER MIT BELEUCHTUNGSEINRICHTUNG FÜR TASTATUR
ORDINATEUR POURVU D'UN DISPOSITIF D'ECLAIRAGE DU CLAVIER

(30) Priority: 06.07.1999 JP 19178099
(43) Date of publication of application: 03.04.2002
(73) Proprietor: International Business Machines Corporation, Armonk, N.Y. 10504 (US); IBM United Kingdom Limited, Portsmouth Hampshire PO6 3AU (GB)
(72) Inventor: TAKAHASHI, Tomoyuki, Hursley Park Winchester Hampshire S021JN (GB); YAMAZAKI, Kazuhiko, Hiratsuka-shi, Kanagawa 254 (JP); YOSHIDA, Shigeru, Yamato-shi, Kanagawa (JP); NAKAZAWA, Yukifumi, Machida-shi, Tokyo (JP); KAWASHIMA, Nobuyuki, Machida-shi, Tokyo (JP)
(74) Representative: Jennings, Michael John
(86) International application number: GB0002562
(87) International publication number: WO01002937

(56) References cited:
- US-A- 5 379 201
- US-A- 5 815 225
- PATENT ABSTRACTS OF JAPAN vol. 1996, no. 07, 31 July 1996 (1996-07-31) & JP 08 076882 A (NEC CORP), 22 March 1996 (1996-03-22)

## Description

### Detailed Description of the Invention:

### Field of the Invention

The present invention relates to battery-driven computers with a light source for illuminating a keyboard thereof.

### Background Art

Portable computers are excellent in portability because they are small in size and light in weight, and can be used at any place independently of commercial power sources by mounting a battery charger in the interior. Generally, the portable computers are provided with a liquid crystal display (LCD), a keyboard and a pointing device and many contrivances have been made in order to economize the consumption power of the battery. Since computers have generally been used in recent years at places remote from offices, there is an increasingly strong demand for using computers in an environment where the light is poor, for example, in a train or a living room.

To use computers, there is a need for users to operate the keyboard and the pointing device whilst viewing the LCD. Because most LCDs are provided with a back light, users can view the screen even if the surroundings are dark. However, since the keyboard and pointing device do not emit light unless they employ fluorescent paint or material, users cannot visually recognize a key position or a script on the key top in the dark and therefore users, other than an experienced person who can handle computers without relaying on vision, cannot sufficiently use computers under such an environment. In addition, the back light of the LCD does not provide enough illumination to operate the keyboard.

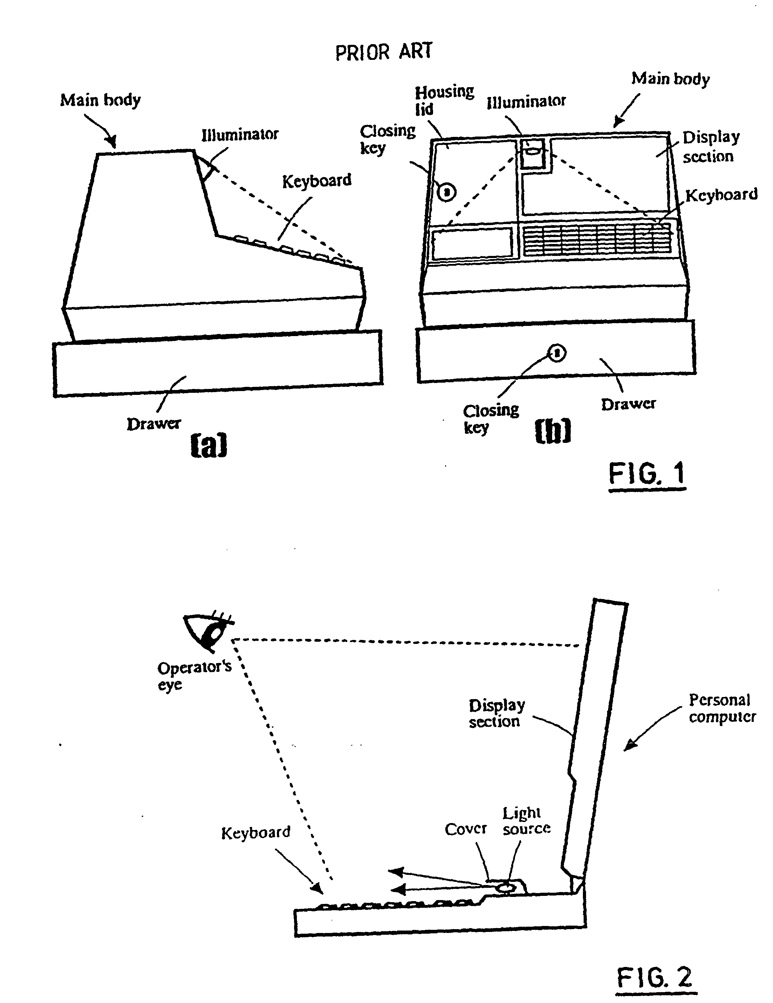

Published Unexamined Utility Model Application No. 59-4493 (creator of device, Suganuma and Yajima) discloses a technique of providing an illuminator in electronic equipment such as an electronic register and illuminating a keyboard thereof, as shown in Figure 1. An illuminator is provided in the upper portion of the front surface display section of the register, and when the register is used, the keyboard can be illuminated. This electronic register, however, is not a portable type but an installed type and is based on the assumption that commercial power sources can be utilized. Thus the application does not disclose a way for disposing the light source at the same position in a portable computer. In other words there is no description of a specific method for disposing the light source on the upper portion of the LCD of a portable computer. In addition, the light source shown in Figure 1 is considered to be an incandescent electric light.

Published Unexamined Patent Application No. 8-314598 (inventor, Sugawara) discloses a technique of illuminating the keyboard of a personal computer (PC), as shown in Figure 2. The light source is disposed between the keyboard and the display section and attached on the main body of the PC. Disposing the light source at this position, however, will cause some problems. First, in portable computers, a large area is used on this side of the keyboard in order to ensure the palm rest portion that holds the palms of a user when the user operates the keyboard. For this reason, in many cases it is difficult to ensure space for the light source at the position shown in Figure 2. In addition, there is a need to make the light source higher than the plane of the key top of the keyboard and provide a cover, in order to illuminate the entire keyboard from the position of the light source shown in Figure 2. For this reason, if an attempt is made to close the cover including the LCD, the computer will become considerably thick. Furthermore, because the entire keyboard is illuminated with the light source disposed at the position shown in Figure 2, there is a need to provide a plurality of point light sources or an elongated light source and therefore a problem with the consumption power of the battery will arise.

In addition, the light source is partially covered so that light is not emitted to a place other than the keyboard. Furthermore, in the aforementioned specification No. 8-314598 it has been described that "In addition, when the light source is attached to the liquid crystal section, it becomes possible to visually recognize the keyboard in the dark place, but there is a problem that (1) a large-capacity light source is required, because the liquid crystal section and the keyboard are illuminated and (2) in the case of a liquid crystal section with a back light, light enters the liquid crystal and therefore disturbs the field of vision." Therefore, the aforementioned specification No. 8-314598 has taught that attaching the light source to the liquid crystal section has been given up because there is a problem from the viewpoint of both the capacity of the light source and the visual field with respect to the liquid crystal section.

Published Unexamined Utility Model Application No. 7-25415 (creator of device, Shinomura and Sasaki) discloses a technique of providing a detachable light source in a notebook-sized PC and illuminating the keyboard. In this publication, the light source is not attached to the main body of the PC and is provided as a separate unit (ie is detachable). Since this method requires that the light source be carried separately from the computer it does not complement the portability of the PC. Also the operation of detachably attaching the light source will give users trouble.

### Summary of the Invention

In accordance with a first aspect of the present invention, there is provided a computer capable of battery powered operation, having a keyboard and a display comprising: an LED holder installed at approximately an upper edge of the display, the holder having a wall formed with an aperture; and an LED installed inside the wall of the LED holder, wherein light radiated from the LED illuminates the keyboard by passing through the aperture.

Preferably a light emitting diode (LED) is selected as a light source for keyboard illumination. Generally, the LED has been used in displaying the operating state of electronic equipment and has been used as a device for displaying states rather than as a device for illumination. However, since LEDs with a relatively high luminous intensity suitable for illumination have been developed in recent years, the LED is used in a preferred embodiment to illuminate the keyboard of a portable computer to solve problems not solved in the background art. The LED is suitable as an illuminator for a keyboard to be mounted on a battery drivable computer, because it is small, and does not degrade the portability of the computer to which it is attached. It is also low in power consumption and so barely shortens the operating time of a battery.

In addition, according to the preferred embodiment an LED holder is attached to substantially the upper edge of a display and an LED is held within the LED holder. This position is most suitable as a place for attaching a light source because there is no obstacle with respect to keyboard illumination. In addition, by disposing a light source here, only a single point light source illuminates the entire keyboard and there is no need to prepare a plurality of point light sources, a line light source, or a surface light source. The wall of the LED holder is formed with an aperture, and light from this LED is passed through the aperture and guided to the keyboard. The distribution of the light passed through the aperture is preferably controlled by adjusting the position at which the LED holder is attached and also the size and position of the aperture in the wall of the LED bolder.

In accordance with the preferred embodiment, a part of the light radiated from the LED is masked by the wall of the LED holder, and the remaining light passing through the aperture does not directly illuminate the display. This is realizable by suitably selecting, for example, the configuration of the holder, the attached position of the holder, the position of the aperture, the size of the aperture, and the like. This overcomes the problem of the prior art that when a light source is provided in the upper portion of the display, light radiated from the light source will disturb the visual recognition of the display.

In the preferred embodiment, when the display is opened so that it is held at approximately 90 degrees to the main body, light from the LED passes through the aperture so that it illuminates substantially the keyboard alone. The angle of approximately 90 degrees is considered to be the smallest angle at which a user uses the computer. If the entire keyboard is illuminated at this angle, the illumination of the keyboard will be sufficiently ensured even if the back cover is opened further. This is also realizable by suitably selecting, for example, a parameter related to the aperture.

Preferably, the LED holder is provided with a shutter that adjusts the opening degree of the aperture. Therefore, the user can adjust light distribution in accordance with the inclined state of the display by manually adjusting the position of the shutter.

According to the preferred embodiment, an LCD is selected as a display and a portable computer is selected as a computer. The present invention is particularly applicable to portable computers, because there are many cases where keyboard illumination is required, as compared with an installed type.

Preferably, the LED is switched off when the back cover is closed. In this way, the battery is prevented from being consumed by closing the back cover without switching off the LED.

Thus, a battery drivable computer is preferably provided which disposes a light emitting diode (LED) on the upper portion of a display such as a liquid crystal display (LCD) and realizes an excellent illumination of keyboard. A computer is provided that can be utilized by a battery driven operation with low consumption power (even when the illuminator is lit) and without occupying a lot of space and which is able to perform effective keyboard illumination without having an adverse effect on the visual recognition of the display. Furthermore portability is not degraded.

The technique of illuminating the keyboard of a portable computer with a light source disposed on the upper portion of the LCD has hitherto been difficult and has not been realized. But, when the LCD is open in order to use the portable computer, there is no obstacle to intercept light between the upper portion of the LCD and the keyboard and therefore it follows that the upper portion of the LCD is most efficient as a position of illuminating the keyboard. However, since a distance from the light source to the keyboard becomes longer, it becomes important that an illuminator as a light source have a great luminous intensity and a lower energy consumption amount. Furthermore, when the keyboard is illuminated from the upper portion of the LCD, there is a need to elaborate a plan so that the visual recognition of the LCD is not disturbed by direct light incident on the LCD. The present invention preferably solves these problems and realizes illumination for the keyboard of a portable computer not obtained in the background art.

### Brief Description of the Drawings

A preferred embodiment of the present invention will now be described in detail, by way of example only, and with reference to the following drawings:
Figure 1 is a schematic diagram showing a conventional register with an illuminator for the keyboard;
Figure 2 is a schematic diagram showing a conventional personal computer with a light source for the keyboard;
Figure 3 is a perspective view showing a preferred embodiment of a portable computer according to the present invention;
Figure 4 is an exploded view showing the disassembled state of the back cover, the LCD, and the LED holder shown in Figure 3 in accordance with a preferred embodiment of the present invention;
Figure 5 is a detailed diagram showing a preferred embodiment of the LED holder shown in Figure 4;
Figure 6 is a sectional view showing how the LED holder is attached in accordance with a preferred embodiment of the present invention;
Figure 7 is a diagram for describing the light distribution characteristic of the light emitted from an LED held by the LED holder in accordance with a preferred embodiment of the present invention;
Figure 8 is a diagram for describing the light distribution characteristic in accordance with a preferred embodiment of the present invention;
Figure 9 is a sectional view of an LED holder with a shutter in accordance with a preferred embodiment of the present invention; and
Figure 10 is a circuit diagram showing a preferred embodiment of a lighting control circuit that switches on and off the LED holder.

### Detailed Description

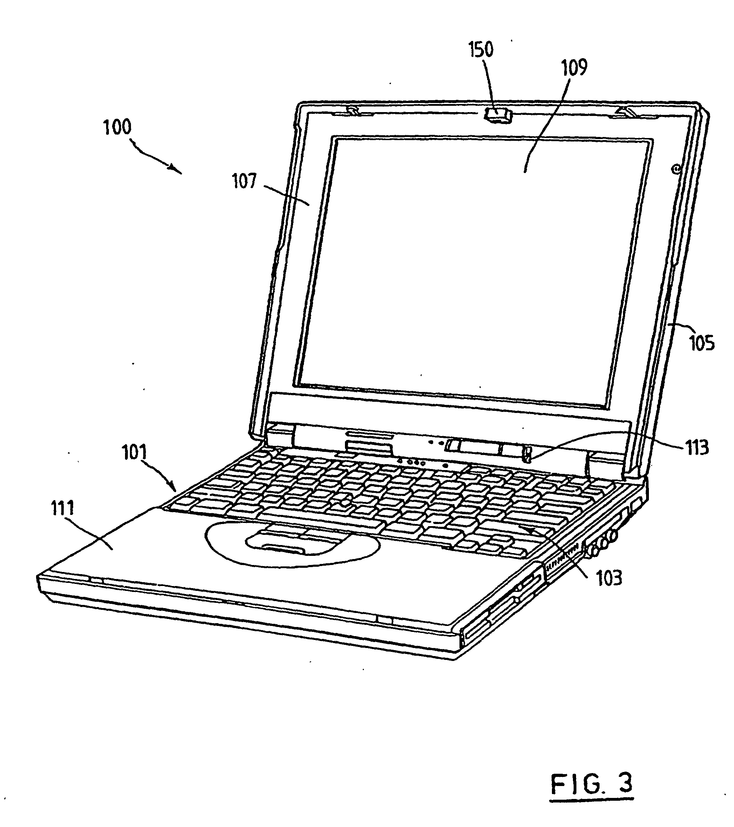

Figure 3 shows a preferred embodiment of a notebook-sized portable computer 100 to which the present invention is applied. A keyboard 103 is disposed on the upper surface of a main body 101, and a palm rest 111, for holding the palms of a user when the user operates the keyboard, is disposed on this side of the keyboard. A back cover 105 is attached at one end thereof to approximately an end of the main body 101 so that it can be opened and closed. The back cover 105 plays a role of covering the keyboard 103 and the palm rest 111 in its entirety when the computer is not being used. A liquid crystal display (LCD) 109 is attached to the back cover 105 and a bezel 107 is also attached to the back cover 105 so that it covers the circumference of the LCD 109 and the circumference of the back cover. In using the computer 100, the user rotates the back cover 105 to 90 degrees or greater with respect to the main body 101 and operates the keyboard 103 whilst viewing the LCD.

The computer 100 is further provided with an LED holder 150, which holds an LED for keyboard illumination, and an LED switch 113 in the interior thereof. With the back cover 105 opened, the user operates the switch 103 to light the LED, whereby the keyboard 103 can be illuminated.

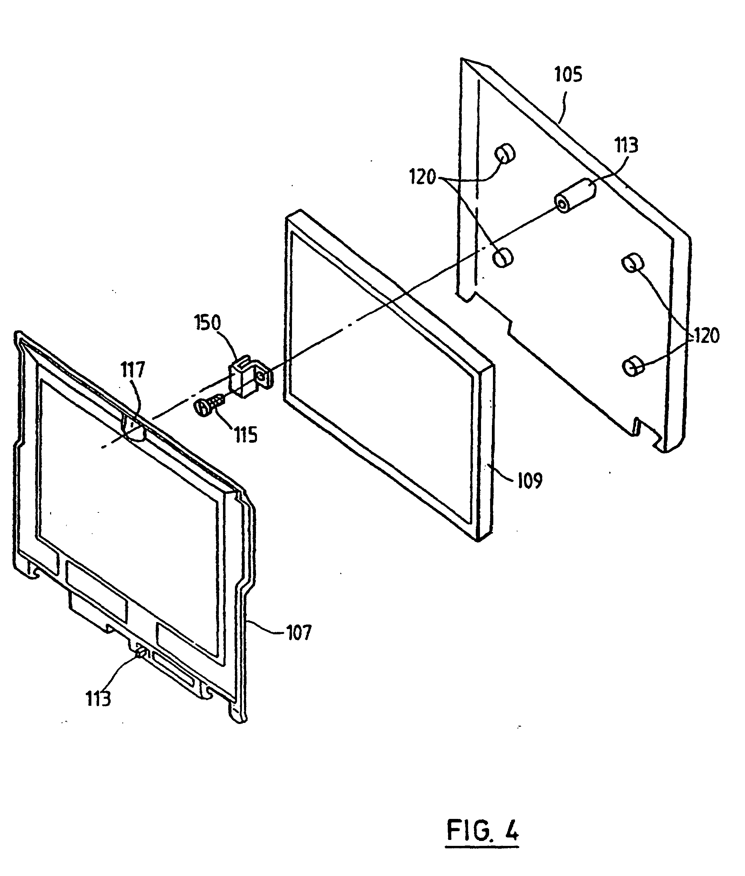

Figure 4 illustrates the disassembled state of the back cover 105, the LCD 109. the bezel 107, and the LED holder 150 according to the preferred embodiment. The back cover 105 is provided with a boss 113 threaded inside, and the LED holder 150 is passed through the aperture 117 of the bezel 107 and is attached to the boss 113 by means of a screw 115. The back cover 105 is formed with bosses 120 that attach the LCD 109 to the back cover 105. The bezel 107 is provided with the switch 113.

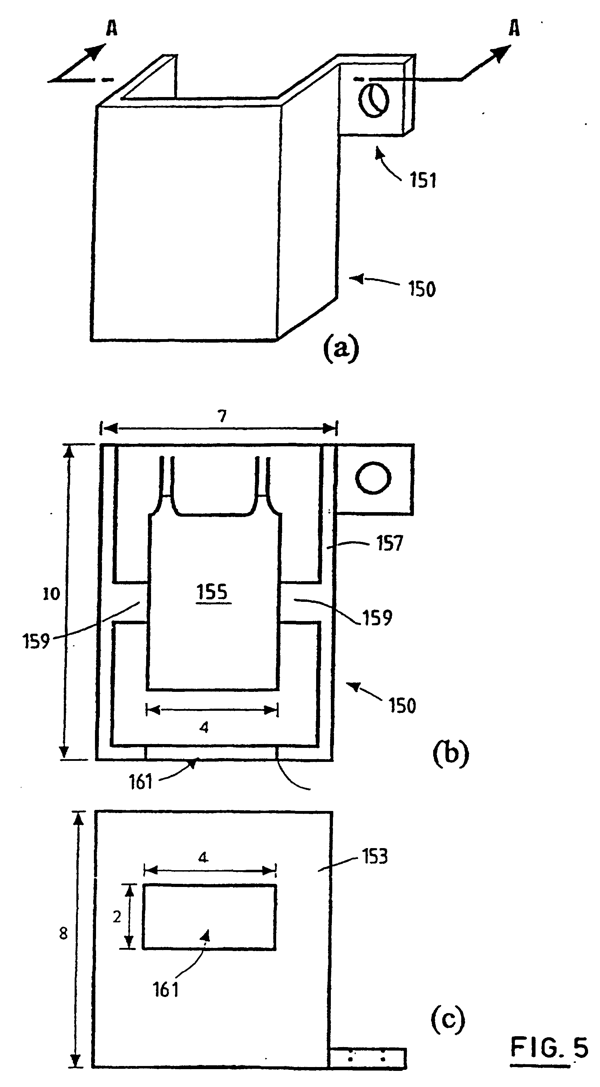

Figure 5 shows an enlarged view of the LED holder 150 according to the preferred embodiment. In Figure 5A the fixing portion 151 of the LED holder 150 is attached to the boss 113. Figure 5B shows a sectional view taken along line A-A in Figure 5A; Figure 5C shows a bottom view of the boss 113 shown in Figure 5B. Figure 5B shows an LED fixing portion 159 which preferably extends inward from a side wall 157, the central portion of the LED fixing portion 159 being provided with an aperture so that it can insert and fix the LED 155. The LED 155 is inserted into this aperture from the upper portion and fixed to the LED holder 150. In addition, as shown in Figure 5C, the bottom portion 153 of the LED holder 150 is provided with an aperture 161. Part of the light emitted from the LED 155 is intercepted by the bottom portion 153, while the remaining part is emitted outside the LED holder 150 via the aperture 161.

The preferable embodiment has adopted the LED as the light source. An LED 155, NSPWF50BS manufactured by Nichia Chemical Industries, Ltd., can for example, be utilized. This LED 155 has luminous intensity 0.18 cd and power consumption 252 mw and thus has characteristics of luminous intensity and lower consumption power sufficient to illuminate the keyboard. In addition, the sectional size of the light emitting portion is as small as 2 × 4 mm and can be housed in the LED holder the size shown in Figure 5. Because in the preferred embodiment the battery capacity of the computer 100 is 4800 mAh, the rate of the power consumption of the LED to the battery capacity is about 1.6%. The computer 100 is therefore is able to operate for 3 hr under standard operating conditions with the LED 155 off, and even if the LED 155 is kept on under the same condition, the operating time of the computer 100 will be shortened only by about 3 min.

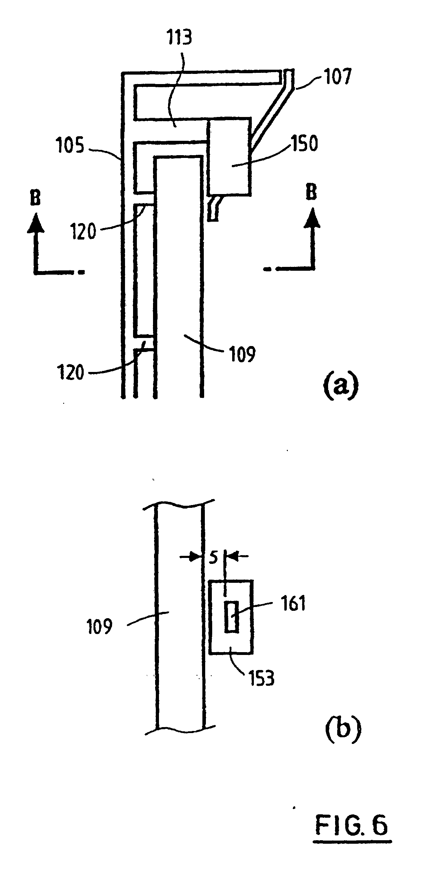

Figure 6 shows the attached state of the LED holder 150 to the back cover 105 according to the preferred embodiment. The LED holder 150 and the LCD 109 are attached to the back cover 105 by the boss 113 and the bosses 120, respectively. The bezel 107 covers the circumference of the LCD 109 and the end portion of the back cover 105, and at the portion to which the LED holder 150 is attached, the bezel 107 is provided with an aperture so that the bottom portion 153 of the LED holder appears outside the bezel.

In Figure 6(B), according to the preferred embodiment, the size of the aperture 161, the distance of the aperture 161 from the surface of the LCD 109, and the angle of the bottom portion 153 with respect to the surface of the LCD are important. This is because is that these parameters become major causes which determine the light distribution characteristic of the light radiated downward from the LED holder 150. In the preferred embodiment, the size of the aperture 161 is 4 mm × 2 mm, the distance from the LCD surface to the aperture 161 is 5 mm, and the angle of the bottom portion 153 with respect to the LCD surface is approximately 90 degrees. This light distribution prevents light radiated by the LED 155 from directly illuminating the LCD surface, whereby the visual recognition of the LCD is not disturbed. Furthermore, the light distribution characteristic is determined so that, during use of the computer, the entire keyboard is effectively illuminated in the range of a predetermined inclined angle of the back cover 105. The setting of the light distribution characteristic will be described in detail below.

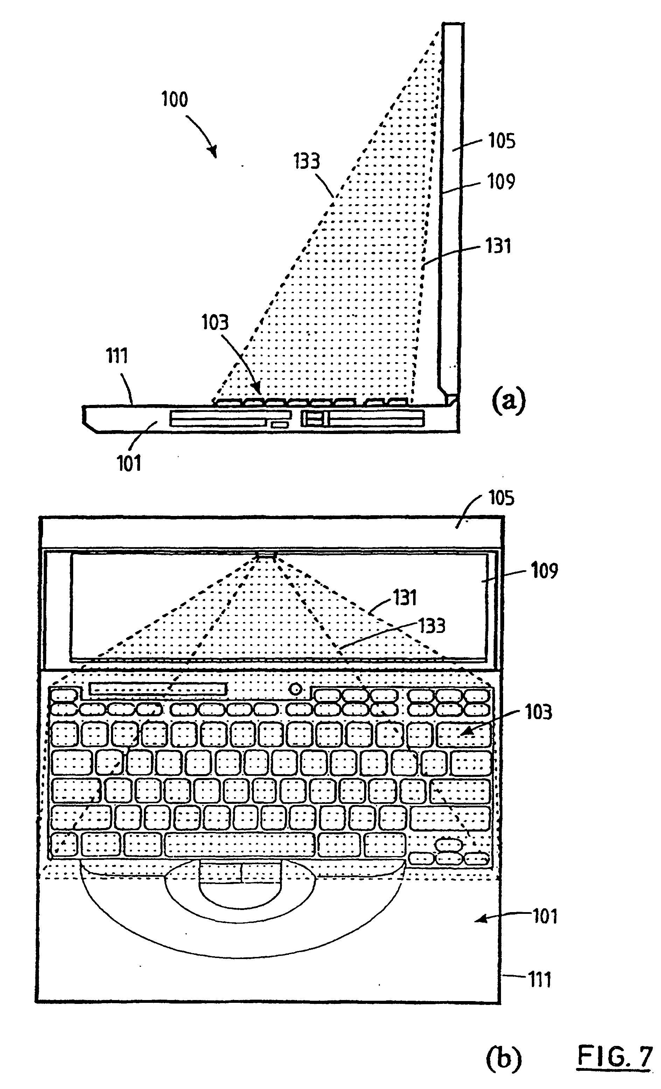

Figure 7 shows, in the portable computer 100, the light distribution characteristic of the light emitted from the LED holder 150 housing the LED 155 according to the preferred embodiment. Figure 7A is a side view, the back cover 105 being opened so that it is held at approximately 90 degrees to the main body 101. In the inclined state of the LCD, a ray of light 131 nearest to the LCD 106 illuminates the end of the keyboard nearest to the LCD. The light ray 131 is determined by the angle of the bottom portion 153 of the LED holder 159 with respect to the LCD surface, the size of the aperture 161, and the distance of the aperture 161 from the LCD surface, as shown in Figure 6B. In Figure 7A, the light ray 131 has been illustrated so that it illuminates the portion of the keyboard 103 nearest to the LCD 109, but the illustration has been made of a light ray having illuminance suitable for keyboard illumination. Actually, a weak ray of light going from the aperture 161 toward the LCD 109 is also emitted.

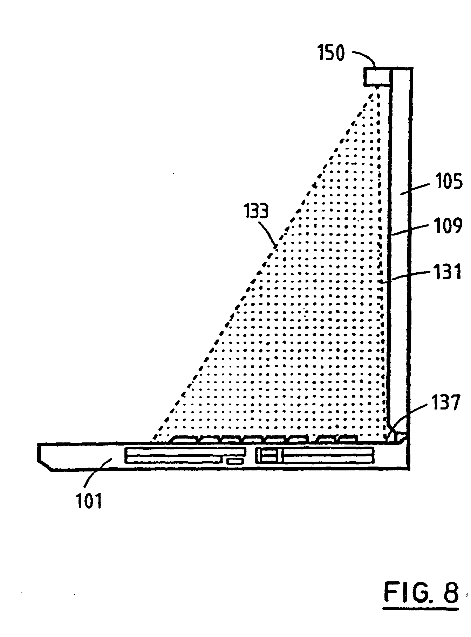

The distribution of this weak light ray according to a preferred embodiment will be described with reference to Figure 8. Part of the light emitted from the LED holder 150 includes a weak light ray going in the direction of the LCD 109, like the light ray 133. However, in this embodiment, the above-mentioned parameters, such as the size of the aperture 161 and the like, are determined so that the light ray 133 does not go to the LCD side beyond the coupled portion 137 between the back cover 105 and the main body 101. Therefore, even when the back cover is used at any angle, there is no possibility that the light will illuminate the LCD 109 directly and therefore there is no possibility that the visual recognition of the LCD will be disturbed.

Returning again to Figure 7, the above-mentioned parameters, such as the size of the aperture 161 and the like, are determined so that, when the back cover 105 is open to 90 degrees, a ray of light 133 farthest from the LCD 109 illuminates the farthest end of the keyboard 103 from the LCD. Figure 7B shows a plan view of the computer shown in Figure 7A in accordance with the preferred embodiment. As shown in Figure 7B, the light distribution characteristic is determined so that, when the back cover is open to 90 degrees, the entire keyboard is illuminated. Generally, the computer 100 is used in a range of 110 to 135 degrees. Therefore, the computer 100 is often used with the back cover opened further than the position of Figure 7A with respect to the main body 101. If the inclined angle of the back cover 105 is gradually increased, the light ray 133 will move to this side of the main body 101 and move beyond the main body 101. However, the entire keyboard 103 is still illuminated, so there is no obstacle in the operation of the keyboard under a dark environment. Since the movement quantity of the distal end of the light ray 131 is extremely small, there is also no obstacle in the illumination of the end of the keyboard 103 near the LCD.

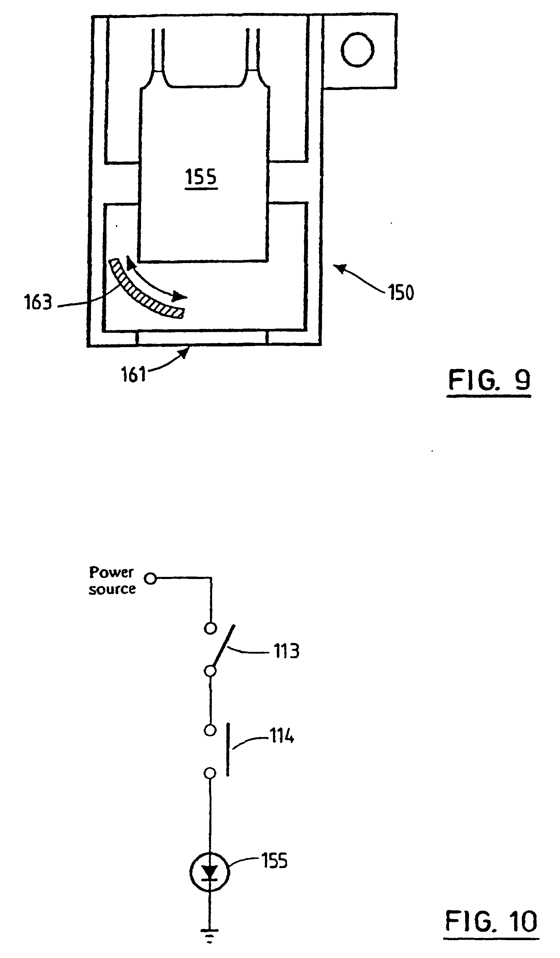

Figure 9 illustrates a shutter 163 provided within the LED holder in order to prevent the light ray 133 from extending beyond the main body 101 and illuminating an unnecessary range when the back cover 105 is gradually inclined in accordance with a preferred embodiment of the present invention. The shutter 163 is provided within the LED holder 150 so that it is manually slidable. A mechanism for manually sliding the shutter 163 may be a mechanism which extends a shaft for fixing the shutter 163 outward from the side wall 157 (see fig 5B) of the LED holder 150 and attaches a control dial to the shaft, or may adopt any other known mechanism. It is preferable that the slid shutter 163 be provided with a locking mechanism that locks the shutter 163 at arbitrary positions. The shutter 163 fulfills a role of adjusting the opening degree of the aperture 161 in accordance with the inclined angle of the back cover 105.

The control of switching on and off the LED in accordance with the preferred embodiment is performed by the switch 113 shown in Figure 3. If the LED 155 is always on, when the switch 113 is on, there are cases where the back cover 105 is closed with the LED 155 on. To prevent this, a second switch 114 interlocking with the operation of opening and closing the back cover 105 is preferably added to a lighting control circuit, as shown in Figure 10. The LED 155, the switch 113, and the second switch are connected in series to a power source. The second switch 114 is on only when the back cover is open. In this state, the switch 113 is switched on or off, whereby the LED 155 can be switched on or off.

## Claims

1. A computer (100) capable of battery powered operation, having a keyboard (103) and a display (109) comprising:
an LED holder (150) installed at approximately an upper edge of the display, the holder having a wall including an aperture (161); and
an LED installed inside the wall of the LED holder,
wherein light radiated from the LED illuminates the keyboard by passing through the aperture.

2. The computer according to Claim 1, wherein the wall of the LED holder masks a part of the light radiated from the LED to avoid a direct illumination to the display by the light passing through the aperture.

3. The computer according to Claim 1, wherein the wall of the LED holder intercepts part of the light radiated from the LED so that, when the display is opened so that it is held at approximately 90 degrees to the keyboard, the light passed through the aperture illuminates substantially the keyboard alone.

4. The computer according to Claim 1, wherein the LED holder has a shutter (163) that is manually operable so as to shut part of the aperture.

5. The computer of claim 1, 2, 3 or 4, wherein the keyboard is installed on the upper surface of a main body and a back cover (105) is pivotably connected at a lower edge thereof to approximately a back edge of the main body (101), and said display is a liquid crystal display installed in the back cover.

6. The portable computer according to Claim 5, further comprising a switch (113) that switches off the LED when the back cover is closed.

## Patentansprüche

1. Computer (100), der für batteriegespeisten Betrieb ausgelegt ist und eine Tastatur (103) sowie eine Anzeige (109) umfasst, mit:
einer LED-Halterung (150), die an ungefähr einem oberen Rand der Anzeige installiert ist, wobei die Halterung eine Wandung aufweist, die eine Öffnung (161) enthält; und
einer LED, die innerhalb der Wandung der LED-Halterung installiert ist,
wobei von der LED abgestrahltes Licht die Tastatur beleuchtet, indem es durch die Öffnung läuft.

2. Computer nach Anspruch 1, wobei die Wandung der LED- Halterung einen Teil des von der LED abgestrahlten Lichts verdeckt, um eine direkte Beleuchtung der Anzeige durch das durch die Öffnung laufende Licht zu vermeiden.

3. Computer nach Anspruch 1, wobei die Wandung der LED- Halterung einen Teil des von der LED abgestrahlten Lichts abfängt, so dass, wenn die Anzeige derart geöffnet ist, dass sie unter ungefähr 90 Grad zur Tastatur gehalten ist, das durch die Öffnung gelaufene Licht im wesentlichen nur die Tastatur allein beleuchtet.

4. Computer nach Anspruch 1, wobei die LED-Halterung einen Verschluss (163) aufweist, der von Hand betätigt werden kann, um einen Teil der Öffnung zu verschließen.

5. Computer nach Anspruch 1, 2, 3 oder 4, wobei die Tastatur an der oberen Oberfläche eines Hauptkörpers installiert ist und ein Rückendeckel (105) an seinem unterem Rand mit ungefähr einem hinteren Rand des Hauptkörpers (101) schwenkbar verbunden ist, und die Anzeige eine in dem Rückendeckel installierte Flüssigkristallanzeige ist.

6. Tragbarer Computer nach Anspruch 5, darüber hinaus einen Schalter (113) aufweisend, der die LED ausschaltet, wenn der Rückendeckel geschlossen wird.

## Revendications

1. Ordinateur (100) pouvant fonctionner sur batterie, comportant un clavier (103) et un écran (105), comprenant:
un support pour diode électroluminescente (150), installé sur le bord supérieur de l'écran, le support ayant une paroi comprenant une ouverture (161); et
une diode électroluminescente (LED), installée dans la paroi du support pour diode,
où la lumière diffusée par la diode électroluminescente illumine le clavier en passant par l'ouverture.

2. Ordinateur selon la revendication 1, où la paroi du support pour diode cache une partie de la lumière émise par la diode électroluminescente afin d'éviter que la lumière passant par l'ouverture n'illumine directement l'écran.

3. Ordinateur selon la revendication 1, où la paroi du support pour diode électroluminescente intercepte une partie de la lumière émise par la diode électroluminescente, de sorte que, lorsque l'écran est ouvert de manière à former un angle d'environ 90 degrés par rapport au clavier, la lumière qui passe par l'ouverture n'illumine pratiquement que le clavier.

4. Ordinateur selon la revendication 1, où le support pour diode électroluminescente comporte un volet (163) qui peut être manoeuvré à la main pour fermer partiellement l'ouverture.

5. Ordinateur selon la revendication 1, 2, 3 ou 4, où le clavier est installé sur la surface supérieure d'un corps principal et un couvercle (105) est fixé par son bord inférieur au bord arrière du corps principal (101) et peut pivoter, où ledit écran est un écran à cristaux liquides installé dans le couvercle.

6. Ordinateur portable selon la revendication 5, comprenant en outre un interrupteur (113) qui éteint la diode électroluminescente quand le couvercle est fermé.
